**Europäisches Patentamt**

**European Patent Office**

**Office européen des brevets**

(11) Publication number: **0 313 171**
**B1**

# EUROPEAN PATENT SPECIFICATION

(45) Date of publication of patent specification: **16.01.91**

(51) Int. Cl.⁵: **B 32 B 5/24**

(21) Application number: **88202345.0**

(22) Date of filing: **20.10.88**

(54) Sandwich material and the use thereof.

(30) Priority: **21.10.87 EP 87202024**
**28.12.87 NL 8703138**

(43) Date of publication of application:
**26.04.89 Bulletin 89/17**

(45) Publication of the grant of the patent:
**16.01.91 Bulletin 91/03**

(84) Designated Contracting States:
**AT BE CH DE ES FR GB GR IT LI LU NL SE**

(56) References cited:
**EP-A-0 264 495**
**DE-A-3 419 142**
**FR-A-2 198 835**
**GB-A-2 147 850**

(73) Proprietor: **Schreiner Luchtvaart Groep B.V.**
**Verbeekstraat 10-12**
**NL-2332 CA Leiden (NL)**

(72) Inventor: **Brambach, Johan Arie**
**c/o Verbeekstraat 10-12**
**NL-2332 CA Leiden (NL)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

## Description

This invention relates to sandwich materials and/or laminate material suitable for preparing a sandwich material, suitable for use in the aircraft and spacecraft industry, the automobile industry and the ship building industry, among other applications, which sandwich material has a greatly improved fire safety.

Aircraft designers aim to use sheet materials of minimum weight in combination with maximum strength and rigidity. A further important condition is that the materials can be effectively moulded and interconnected. An additional requirement increasingly imposed upon this kind of materials, in particular in the case of interior parts, is that they have a sufficient degree of fire-retarding properties.

The combination of strength, stiffness and light weight can be found in sandwich materials made of a light-weight core, such as a honeycomb or a foam with two reinforcing layers applied to its surface. These reinforcing layers often consist of fibre-reinforced synthetic resins. In known sandwich materials, in the main irreversibly setting plastics are used, such as polyurethane foams, which generally are rather difficult to process and, after being moulded, cannot be shaped further.

It has also already been proposed to make set shaped articles with a sandwich structure by heating and moulding a composite material comprising a core of a solid material with cavities therein, and covering layers reinforced with a fibrous mat. Canadian patent 1,184,106 describes such a material consisting of a polymethacrylimide foam reinforced with polyester or glass fibre mats impregnated with an epoxy resin in the B stage, which means that this material can still be shaped with heating, whereafter the material becomes set. Further moulding is then impossible.

Such materials do not, however, possess the desired fire retarding properties. Good fire retarding properties can be obtained with solid fibre-reinforced sheets on the basis of irreversibly setting synthetic resins, such as phenol resin. These materials, however, do not have the desired light weight and possibilities of being re-shaped more than once.

For materials used in aircraft construction, and in particular for interior parts of aircraft, the degree of fire resistance is determined by means of the "Heat radiation resistance and heat release test" according to FAR 25.853 a-1 + Appendix F part IV. A result of less than 100 kW/m² (HRR-max) in this test is at present regarded as representing a good fire resistance.

Another important feature for fire safety is that the material is self-extinguishing, that is to say that it is not itself capable of maintaining the fire, without an external source of fire, that it does not produce toxic gases upon combustion, and that it does not drip.

European patent application 264,495, which is not a prior publication, describes a thermoplastic sandwich material comprising a thermoplastic foam, according to the example a polymethacrylamide foam, provided on one or both surfaces with a fibrous mat impregnated with a thermoplastic synthetic resin, such as a polyetherimide. That sandwich material has a number of clear advantages over prior systems. The fire safety of the products described in the example of that application is clearly superior to that of the known products. The results of the material in the test described above range from 80 to 100 kW/m².

It is an object of the present invention to provide a sandwich material which has a sufficient mechanical strength and sufficient thermal dimensional stability, can be re-shaped more than once, and satisfies very high requirements of fire safety.

The sandwich material according to the invention is characterized in that it comprises at least one layer of a thermoplastic polyetherimide, polyethersulfone or polyether-etherketon foam, and a fibre-reinforced layer consisting of a fibrous mat impregnated with thermoplastic polyetherimide or polyether-etherketon, applied to at least one surface of the foam.

In a preferred embodiment of the invention, the sandwich material consists of a single-ply foam layer provided on opposite sides with an impregnated fibre mat.

In another preferred embodiment of the sandwich material or the laminate according to the present invention, the core layer itself is built up of at least two layers of foam bonded together for example with a possibly fibre-reinforced synthetic material, by gluing or by welding, in particular by means of fibre-reinforced polyetherimide or polyether sulfone. This composite foam layer is in turn provided on one or both sides with a fibre-reinforced layer.

The fibrous mat, may be a fibrous web or a woven web of a aromatic polyamide glass fibres or carbon fibres which are again impregnated with a polyetherimide or a polyether etherketone (PEEK). In certain cases it may be advantageous to have the fibres unidirectionally oriented in the fibre-reinforced layer. In case the core layer is built up from more than one foam layer with a possibly fibre-reinforced layer between them, it is also possible that the synthetic resin of said fibre-reinforced layer is a different layer of synthetic material, such as polycarbonate. It is preferable, however, both from the point of view of fire behaviour, and from the point of view of manufacture of the laminate and its mechanical properties to use a polyetherimide plastic in that layer, too. It is also possible to form the foam in situ between two layers.

A preferred material for the fibres is glass, as this product offers the most advantages from the point of view of fire safety. However, it is possible to use combinations of fibres, or to use different types of fibres in one laminate in the different fibre-reinforced layers.

As a synthetic material for the foam material, polyetherimide or polyether sulfone is used. Of these, polyetherimide is preferred in connection with the fireproofing properties to be obtained therewith.

If desired, however, it is also possible to use PEEK as the material for the foam layer. This also applies to the synthetic material to be used as impregnation for the fibres.

The sandwich material according to the invention can in particular be used extremely well in the aircraft, spacecraft, automobile and/or ship building industries. The material according to the invention can be used for parts of aircraft, such as interior parts, containers, streamline parts parts of chairs and the like.

The material has considerable strength, rigidity and light weight, so that it is possible for the construction to be kept extremely light.

The sandwich material according to the invention can be used for the manufacture of articles having complex shapes. For this purpose, for example, two half laminates can be used, each consisting of a layer of the foam and a fibre-reinforced layer. These two half laminates may be introduced into the same mould, whereafter the mouldings are bonded together via the surface not provided with a fibre-reinforced layer. If desired, it is even possible to interpose a fibre-reinforced layer between them.

The outer surface of the material, i.e., the fibre-reinforced layer, may be provided with supplementary layers, such as impregnated woven fabrics or non-wovens consisting, for example, of carbon fibres, aramide fibres or glass fibres, or impregnated wovens or non-wovens consisting of combinations of two or more of such fibres. This has the advantage that certain local reinforcements or adaptations can be made to the sandwich material without it being necessary to provide separate mechanical reinforcing parts.

The sandwich material according to this invention can be made in the manner as described, for example, in the above non-prepublished European patent application. For this purpose, a foam may be used, which may have been subjected to a surface treatment, such as the provision of shallow grooves to improve bonding, to which foam the fibre-reinforced layer is applied by means of an increase in pressure and temperature. If desired, one or both surfaces of the products to be bonded together may be softened with a solvent for it, such as dichloromethane. This may be combined with the application of a thin layer of a solution of the synthetic material (PES, PEI or PEEK) in a solvent, or the treatment can be confined to just applying such a solution which improves bonding. It is also possible, by a suitable choice of pressure and temperature, to omit applying such a solution, or to soften one or both layers. If desired, it is also possible to apply a film layer between the foam and the top layer, which film layer is not fibrereinforced and functions as a bonding layer.

The foil functioning as a bonding layer can be selected from thermoplastic films capable of bonding to materials of the core and the top layer. A large number of materials are suitable for use, such as polyamide, PEEK, polyether sulfone (PES) and polyetherimide (PEI). From the viewpoint of fire behaviour, it is preferable to choose PEI, PEEK or PES, in particular PEI.

Starting from the application of a foil as a bond improver, for example, between the foam core and the top layer, various procedures for the bonding of the layers are possible.

A first method consists in superimposing the layers to be bonded together, and bonding these together with a suitable choice of temperature, time, pressure and, if desired, softening agent.

In a second method, the bonding film is first applied to the top layer. This can be done in various ways, for example, by heating under pressure, in the presence or absence of softening agent. As no foam material is used in this procedure, the use of pressure to ensure bonding between top layer and bonding film is very suitable. The modified top layer thus produced is subsequently applied to the foam core. This can be effected by heating under pressure, but it is preferable to apply a softening agent to the modified top layer, whereafter the softened side is applied to the foam core with heating. In this way, good bonding is obtained without it being necessary to apply much pressure. This is of course an advantage in methods employing foam, as it reduces the risk of unduly compressing the foam.

An alternative way of making the material according to the invention comprises forming foam in situ on the fibre-reinforced polyetherimide. This means that the starting product is not a ready sheet of foam material, but that a layer of liquid foam or a latently expandable material is applied to the fibre-reinforced layer. The sandwich material is then formed under accurately controlled conditions.

The materials according to the invention possess a unique combination of properties. The material is light in weight, combined with good mechanical properties, which render it extremely suitable for use in, for example, aircraft interiors. Moreover, and very importantly, the material is so fire resistant that it easily scores a value of less than 50 kW/m$^2$ in the HRR-FAR test as defined above. In particular for thermoplastic materials, this combination of properties is highly unusual.

The invention is illustrated in and by the following examples, without being limited thereto.

### Example 1

A sandwich material was composed, starting from a 5 mm thick sheet of polyetherimide foam (Ultem, GEP) and two layers of glass fibre reinforced polyetherimide (Ultem (TM), GEP).

The layers of glass fibre reinforced polyetherimide were painted with dichloromethane, which softened the matrix material.

The fibre-reinforced material was applied to the foam sheet with the softened surfaces facing the sheet. This composite was introduced into a heated press, in which the sandwich material was made at 4 bar and 185°C.

A test piece of this material, having a thickness of 4.5 mm and a weight of 0.75 kg/m², was subjected to the Heat radiation resistance and heat release test according to FAR. The result was a value of 15 kW/m² (HRR-max) and 9 kW.min/m² (MR-2 min). By comparison, a comparable sandwich material on the basis of polymethacrylamide has a value of 100 kW/m² (HRR-max) in this test.

### Example 2

A sandwich material was composed starting from a sheet of polyetherimide foam (Ultem(TM), GEP) as the core material. For this purpose, first two top layers were made, in each case by pressing two layers of polyetherimide-impregnated glass fibre mat (SE-107, ten Kate) together under pressure (60 bar) and with heating for 300 seconds. The polyetherimide content of the polyetherimide-impregnated glass fibre mat was 43% by weight.

To one side of these two top layers, a bonding foil was applied by heating under pressure. This bonding foil was a 75 μm thick foil of polyetherimide. By means of dichloromethane, the side of the top layers coated with bonding foil was softened, and these top layers were applied to the foam sheet, with the softened side facing it, at a temperature of 185°C. The resulting sandwich material had a thickness of 6 mm. The "Heat radiation and heat resistance test" according to FAR gave for HRR-max a value of 42.kW/m⁻² and for HR-2 min a value of 20 kW.min.m⁻².

### Example 3

A sandwich material was made from a polyetherimide foam sheet and a polyetherimide-impregnated glass fibre mat. One surface of the impregnated glass fibre mat was softened with dichloromethane and subsequently bonded to the foam sheet. The resulting sandwich material had a thickness of 6 mm. The "Heat radiation and heat resistance test" according to FAR gave a HRR-max value of 53 kW.m⁻² and a HR-2 min value of 28 kW.min.m⁻².

### Claims

1. Sandwich material and/or laminate material suitable for preparing a sandwich material, comprising at least one layer of a thermoplastic polyetherimide, polyethersulfone or polyetheretherketon foam, and a fibre-reinforced layer consisting of a fibrous mat impregnated with thermoplastic polyetherimide or polyetheretherketon, applied to at least one surface of the foam.

2. A material as claimed in claim 1, characterized in that the foam is provided with a said impregnated fibrous mat on both sides.

3. A material as claimed in claim 1 or 2, characterized by a core layer built-up from at least two layers of thermoplastic foam, said layers being bonded together, and said core layer being provided on at least one surface with a said impregnated fibrous mat.

4. A material as claimed in claim 3, characterized in that the core layer comprises at least two layers of foam material, said layers being bonded together and there being no fibrous mat between said layers.

5. A material as claimed in claim 3, characterized in that the core layer comprises at least two layers of foam material, said layers being bonded together and including a fibrous mat between them.

6. A material as claimed in any of claims 1-5, characterized in that the fibrous web is a woven fabric, a knitted fabric, a non-woven and/or unidirectionally oriented fibre structure.

7. A material as claimed in any of claims 1-6, characterized in that the fibres are aramide fibres, carbon fibres, glass fibres or a combination of two or more of these fibres.

8. A material as claimed in claim 7 characterized in that the fibres are glass fibres.

9. A material as claimed in any of claims 1, 2 and 6-8, characterized in that the foam has been made in sit.

10. Parts for aircraft, spacecraft, automobiles and/or ships, consisting in full or in part of the material as claimed in any of claims 1-9.

### Patentansprüche

1. Sandwich-Material und/oder Schichtstoff, der zur Herstellung eines Sandwich-Materials geeignet ist, dadurch gekennzeichnet, daß es mindestens eine Schicht eines thermoplastischen Polyetherimids, eines Polyethersulfons oder Polyether-Etherketonschaumstoffs umfaßt, und eine faserverstärkende Schicht, die aus einer Fasermasse besteht, die mit thermoplastischen Polyethermid oder Polyether-Etherketon imprägniert ist und die auf mindestens eine Fläche des Schaumstoffs aufgebracht ist.

2. Material nach Anspruch 1, dadurch gekennzeichnet, daß der Schaumstoff auf beiden Seiten mit der imprägnierten Fasermasse versehen ist.

3. Material nach Anspruch 1 oder 2, gekennzeichnet durch eine Kernlage, die aus mindestens zwei Schichten des thermoplastischen Schaumstoffs aufgebaut ist, die Schichten miteinander verbunden sind und die Kernlage an mindestens einer Oberfläche mit der imprägnierten Fasermasse verbunden ist.

4. Material nach Anspruch 3, dadurch gekennzeichnet, daß die Kernlage mindestens zwei Schichten aus Schaumstoff umfaßt, daß die beiden Schichten miteinander verbunden sind und daß sich keine Fasermasse zwischen den Schichten befindet.

5. Material nach Anspruch 3, dadurch gekennzeichnet, daß die Kernlage mindestens zwei Schichten aus Schaumstoff umfaßt, daß die Schichten miteinander verbunden sind und zwischen sich eine Fasermasse enthalten.

6. Material nach einem der Ansprüche 1 bis 5, dadurch gekennzeichnet, daß die Fasermasse ein gewebter Stoff, ein gestrickter Stoff, ein Vlies und/oder eine in einer Richtung ausgerichtete Faseranordnung ist.

7. Material nach einem der Ansprüche 1 bis 6, dadurch gekennzeichnet, daß die Fasern Aramidfasern, Kohlenstoffasern, Glasfasern oder eine Kombination aus zwei oder mehreren dieser Fasern sind.

8. Material nach Anspruch 7, dadurch gekennzeichnet, daß die Fasern Glasfasern sind.

9. Material nach einem der Ansprüche 1, 2 und 6 bis 8, dadurch gekennzeichnet, daß der Schaumstoff in situ gebildet wurde.

10. Teile von Flugzeugen, Raumfahrzeugen, Kraftfahrzeugen und/oder Schiffen, dadurch gekennzeichnet, daß sie ganz oder teilweise aus dem in einem der Ansprüche 1 bis 9 beanspruchten Material bestehen.

**Revendications**

1. Matériau sandwich et/ou matériau stratifié convenant pour préparer un matériau sandwich, comportant au moins une couche d'une mousse thermoplastique de polyétherimide, de polyéthersulfone ou de polyéther-éthercétone, ainsi qu'une couche armée de fibres constituée d'un tapis de fibres imprégné de polyétherimide ou de polyéther-éthercétone thermoplastique, appliquée sur au moins l'une des faces de la mousse.

2. Matériau comme revendiqué dans la revendication 1, caractérisé par le fait que la mousse est prévue avec ledit tapis de fibres imprégné sur ses deux faces.

3. Matériau comme revendiqué dans la revendication 1 ou 2, caractérisé par une couche, formant noyau, constituée d'au moins deux couches de mousse thermoplastique, lesdites couches étant liées ensemble, et ladite couche formant noyau étant prévue avec ledit tapis de fibres imprégné sur au moins l'une de ses faces.

4. Matériau comme revendiqué dans la revendication 3, caractérisé par le fait que la couche formant noyau est constituée d'au moins deux couches de matériau mousse, lesdites couches étant liées ensemble et aucun tapis fibreux ne se trouvant entre lesdites couches.

5. Matériau comme revendiqué dans la revendication 3, caractérisé par le fait que la couche formant noyau est constituée d'au moins deux couches de matériau mousse, lesdites couches étant liées ensemble et incluant entre elles un tapis fibreux.

6. Matériau comme revendiqué dans l'une quelconque des revendications 1-5, caractérisé par le fait que l'âme fibreuse est un tissu tissé, un tissu tricoté, une structure de fibres non tissées et/ou orientées unidirectionnellement.

7. Matériau comme revendiqué selon l'une quelconque des revendications 1-6, caractérisé par le fait que les fibres sont des fibres d'aramide, des fibres de carbone, des fibres de verre ou une combinaison de deux ou plus de ces fibres.

8. Matériau comme revendiqué dans la revendication 7, caractérisé par le fait que les fibres sont des fibres de verre.

9. Matériau comme revendiqué dans l'une quelconque des revendications 1, 2 et 6-8, caractérisé par le fait que la mousse a été fabriquée en place.

10. Pièces pour l'aéronautique, l'espace, les automobiles et/ou les bateaux, constituées en tout ou en partie du matériau comme revendiqué dans l'une quelconque des revendications 1-9.